# EUROPEAN PATENT APPLICATION

(11) **EP 4 096 224 A1**
(43) Date of publication of application: **30.11.2022**
(21) Application number: 22163252.4
(22) Date of filing: 21.03.2022
(51) Int. Cl.: H04N 21/2187, H04N 21/8547, H04N 21/4788, H04N 21/43, H04N 21/658, H04N 21/482

(54) **METHOD AND APPARATUS FOR DISPLAYING LIVE CLIP**

(30) Priority: 25.05.2021 CN 202110573468
(71) Applicant: Beijing Dajia Internet Information Technology Co., Ltd., Beijing 100085 (CN)
(72) Inventor: Zhang, Haowen, Beijing, 100085 (CN); Tan, Peiqiang, Beijing, 100085 (CN)
(74) Representative: Angerhausen, Christoph

(57) **Abstract**

The present disclosure relates to a method for displaying a live clip. The method includes: receiving first request information sent by a client, the first request information including an identifier of the live clip; acquiring the live clip corresponding to the identifier of the live clip, the live clip including an identifier of a live stream and a timestamp of the live clip; acquiring an interactive message corresponding to the identifier of the live clip, the interactive message including the identifier of the live stream and a timestamp of the interactive message; and sending the live clip and the interactive message to the client, to enable the client to display the live clip and the interactive message based on the identifier of the live stream, the timestamp of the live clip and the timestamp of the interactive message.

## Description

### FIELD

The present disclosure relates to the field of computer technology, and in particular to a method, an apparatus, an electronic device and a storage medium for displaying a live clip.

### BACKGROUND

With the continuous development of science and technology, mobile Internet has penetrated into people's daily life and played an important role. More and more people use live broadcasts to share life and convey information. The highlight moments in the live broadcast are often favored by users. The display of the highlight moments in the live broadcast has become an indispensable and important content for enhancing the user experience.

Therefore, improving the display effect of exciting live clips is a technical problem to be solved urgently.

### SUMMARY

The present disclosure provides a method and an apparatus for displaying a live clip, so as to improve the display effect of highlight live broadcast clips. The technical solutions of the present disclosure are described as follows.

According to embodiments of the present disclosure, there is provided a method for displaying a live clip, which is applied to a server, and includes: receiving first request information sent by a client, the first request information including an identifier of the live clip; acquiring the live clip corresponding to the identifier of the live clip, the live clip including an identifier of a live stream and a timestamp of the live clip; acquiring an interactive message corresponding to the identifier of the live clip, the interactive message including the identifier of the live stream and a timestamp of the interactive message; and sending the live clip and the interactive message to the client, to enable the client to display the live clip and the interactive message based on the identifier of the live stream, the timestamp of the live clip and the timestamp of the interactive message.

In an implementation of the present disclosure, the method also includes: sending a live clip push message to the client, to enable the client to generate the first request information based on the live clip push message, the live clip push message including the identifier of the live clip.

In an implementation of the present disclosure, before sending the live clip push message to the client, the method also includes: receiving second request information sent by the client; acquiring a display condition of the live clip based on the second request information; and sending the display condition to the client, to enable the client to generate the first request information based on the live clip push message in response to determining that a current state of a user meets the display condition.

In an implementation of the present disclosure, acquiring the live clip corresponding to the identifier includes: searching the live clip in a first mapping relationship table based on the identifier of the live clip, in which the first mapping relationship table is pre-stored and includes a first mapping relationship between the identifier of the live clip and the live clip.

In an implementation of the present disclosure, the method also includes: acquiring the live clip from a live video; generating the identifier of the live clip; and establishing the first mapping relationship between the identifier of the live clip and the live clip.

In an implementation of the present disclosure, acquiring the interactive message corresponding to the identifier of the live clip includes: searching the interactive message in a second mapping relationship table based on the identifier of the live clip, in which the second mapping relationship table is pre-stored and includes a second mapping relationship between the identifier of the live clip and the interactive message.

In an implementation of the present disclosure, the method also includes: receiving a live clip message including the identifier of the live clip, the identifier of the live stream and the timestamp of the live clip; acquiring the interactive message pre-stored based on the identifier of the live stream and the timestamp of the live clip; and establishing the second mapping relationship between the identifier of the live clip and the interactive message.

In an implementation of the present disclosure, the method also includes: acquiring the interactive message from a live video; and storing the interactive message.

According to embodiments of the present disclosure, there is provided a method for displaying a live clip, which is applied to a client, and includes: sending first request information to a server, the first request information including an identifier of the live clip; receiving the live clip corresponding to the identifier of the live clip, the live clip including an identifier of the live stream and a timestamp of the live clip; receiving an interactive message corresponding to the identifier of the live clip, the interactive message including the identifier of the live stream and a timestamp of the interactive message; and displaying the live clip and the interactive message based on the identifier of the live stream, the timestamp of the live clip and the timestamp of the interactive message.

In an implementation of the present disclosure, the method also includes: receiving a live clip push message including the identifier of the live clip; and generating the first request information based on the live clip push message.

In an implementation of the present disclosure, generating the first request information based on the live clip push message includes: generating a live clip displaying card based on the live clip push message; displaying the live clip displaying card; and generating the first request information in response to a displaying operation for the live clip displaying card from a user.

In an implementation of the present disclosure, the live clip push message includes at least one of: a cover of the live clip and a duration of the live clip; the live clip displaying card includes at least one of: the cover of the live clip and the duration of the live clip.

In an implementation of the present disclosure, the method also includes: generating the first request information based on the live clip push message includes: acquiring a current state of a user; and generating the first request information based on the live clip push message in response to that the current state of the user meets a display condition of the live clip.

In an implementation of the present disclosure, the method also includes: sending second request information to the server; and receiving the display condition of the live clip sent by the server according to the second request information.

According to embodiments of the present disclosure, there is provided an apparatus for displaying a live clip, which is applied to a server, and includes: a first receiving module, configured to receive first request information sent by a client, the first request information including an identifier of the live clip; a first acquiring module, configured to acquire the live clip corresponding to the identifier of the live clip, the live clip including an identifier of a live stream and a timestamp of the live clip; a second acquiring module, configured to acquire an interactive message corresponding to the identifier of the live clip, the interactive message including the identifier of the live stream and a timestamp of the interactive message; and a first sending module, configured to send the live clip and the interactive message to the client, to enable the client to display the live clip and the interactive message based on the identifier of the live stream, the timestamp of the live clip and the timestamp of the interactive message.

The technical solutions provided by the embodiments of the present disclosure bring at least the following beneficial effects: the live clip and interactive message corresponding to the identifier of the live clip are obtained according to the identifier of the live clip in the first request information sent by the client, and the live clip and interactive message are sent to the client, the client displays the live clip and the interactive message corresponding to the live clip according to the identifier of the live stream, the timestamp of the live clip, and the timestamp of the interactive message. The server may respond to the client's request in a timely manner so that the client may display the live clip and interactive message synchronously, thereby realizing a real-time display of the highlight live broadcast clips. By aligning the timestamps, the corresponding interactive message may be displayed while displaying the highlight live broadcast clip, which improves the display effect.

It should be understood that the above general description and the following detailed description are only exemplary and explanatory, and may not limit the disclosure.

### BRIEF DESCRIPTION OF THE DRAWINGS

Fig. 1 is a flowchart showing a method for displaying a live clip according to an embodiment.
Fig. 2 is a schematic diagram showing a method for displaying a live clip according to an embodiment.
Fig. 3 is a flowchart showing a server sending a live clip displaying condition to a client in a method for displaying a live clip according to an embodiment.
Fig. 4 is a flowchart showing establishing a first mapping relationship in a method for displaying a live clip according to an embodiment.
Fig. 5 is a flowchart of establishing a second mapping relationship in a method for displaying a live clip according to an embodiment.
Fig. 6 is a flowchart of acquiring and storing an interactive message in a method for displaying a live clip according to an embodiment.
Fig. 7 is a flowchart showing a method for displaying a live clip according to another embodiment.
Fig. 8 is a flowchart showing a client generating first request information in a method for displaying a live clip according to another embodiment.
Fig. 9 is a flowchart showing a client generating and displaying a live clip displaying card in a method for displaying a live clip according to another embodiment.
Fig. 10 is a flowchart of judging whether a current state of a user meets a display condition of the live clip in a method for displaying a live clip according to another embodiment.
Fig. 11 is a flowchart showing a client acquiring a display condition of a live clip in a method for displaying a live clip according to another embodiment.
Fig. 12 is a signaling interaction diagram showing a method for displaying a live clip according to an embodiment.
Fig. 13 is a block diagram showing an apparatus for displaying a live clip according to an embodiment.
Fig. 14 is a block diagram showing an apparatus for displaying a live clip according to another embodiment.
Fig. 15 is a block diagram showing an electronic device for displaying a live clip according to an embodiment.

### DETAILED DESCRIPTION

In order to enable those skilled in the art to understand the technical solutions of the present disclosure, reference will be made clearly and completely technical solutions in the embodiments of the present disclosure with accompanying drawings.

It should be noted that terms "first" and "second" in the specification and claims of the present disclosure and the accompanying drawings are used to distinguish similar objects, rather than to describe a specific order or sequence. It should be understood that data used in such a manner may be interchanged under appropriate circumstances so that embodiments of the present disclosure described herein may be implemented in a sequence other than the sequence illustrated or described herein. The implementations described in the following embodiments do not represent all implementations consistent with the present disclosure; instead, the implementations described in the following embodiments are merely examples of an apparatus and method consistent with the attached claims and some aspects of the present disclosure.

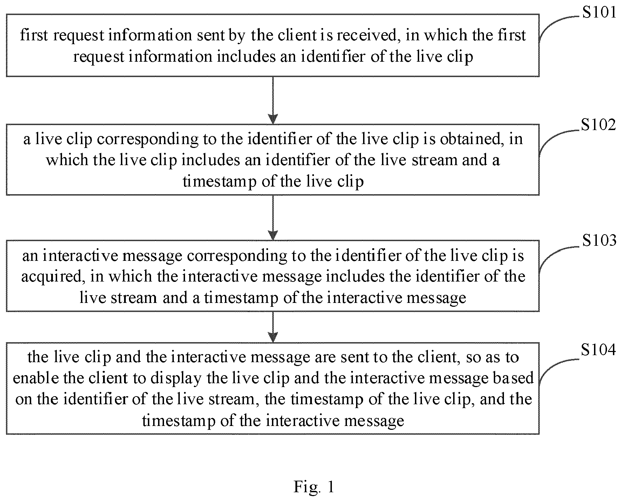

Fig. 1 is a flowchart showing a method for displaying a live clip according to an embodiment. As shown in Fig. 1, the method for displaying a live clip may be applied to a server and includes following steps.

In step S101, first request information sent by the client is received, in which the first request information includes an identifier of the live clip.

It should be noted that an executive object of the method for displaying a live clip in the embodiments of the present disclosure is an apparatus for displaying a live clip provided on the server in the embodiments of the present disclosure, in which the server may include a live broadcast server, a highlight moment server, an interactive message server, and an audio/video server, and may also be an integral server including functions of the above-mentioned server.

The client refers to an application, a web page, or a terminal device that provide services by the server. For example, if the server of the present disclosure is a server of a short video application, the client is all the short video applications installed on the user's terminal device, or a web page, an application, etc. which are used by a manager or a developer of the short video application to manage and maintain the short video application, which are not limited in the embodiments of the present disclosure.

In embodiments of the present disclosure, the client sends the first request information to the server, and the server may receive the first request information sent by the client in real time. The first request information may specifically include, but is not limited to, an identifier of the live clip, etc., which is used to request to obtain the live clip corresponding to the identifier of the live clip and an interactive message corresponding to the live clip. The identifier of the live clip is used to mark the uniqueness of the live clip, such as an ID (Identity Document) of the live clip.

In step S102, a live clip corresponding to the identifier of the live clip is obtained, in which the live clip includes an identifier of the live stream and a timestamp of the live clip.

In the embodiments of the present disclosure, the server obtains the live clip corresponding to the identifier of the live clip according to the identifier of the live clip in the first request information received in step S101, in which the live clip may specifically include, but is not limited to, an identifier of a live stream to which the live clip belongs and a timestamp of the live clip, etc. The live clip may be a highlight clip in the live video specified by the user, or it may be a highlight clip determined by a system according to an interaction situation in the live broadcast room, for example, a corresponding clip when there are more interactive messages and better interaction conditions.

In step S103, an interactive message corresponding to the identifier of the live clip is acquired, in which the interactive message includes the identifier of the live stream and a timestamp of the interactive message.

In the embodiment of the present disclosure, the server obtains the interactive message corresponding to the identifier of the live clip according to the identifier of the live clip in the first request information received in step S101, in which the interactive message may specifically include, but is not limited to, an identifier of a live stream to which the live clip belongs and a timestamp of the interactive message, etc.

In step S104, the live clip and the interactive message are sent to the client, so as to enable the client to display the live clip and the interactive message based on the identifier of the live stream, the timestamp of the live clip, and the timestamp of the interactive message.

In the embodiment of the present disclosure, the server sends the live clip obtained in step S102 and the interactive message obtained in step S103 to the client, and the client receives the live clip and the interactive message, and synchronously display the live clip and the interactive message based on the identifier of the live stream, the timestamp of the live clip and the timestamp of the interactive message contained in the live clip and the interactive message. As a result, the user may browse interactive messages in the live broadcast clip in real time while watching the live clip on the client side, which improves the display effect and enhances the user experience. It should be noted that, in the embodiments of the present disclosure, the identifier of the live stream in the live clip obtained by the client is same as the identifier of the live stream in the interactive message, such that the live clip and interactive information may be synchronous displayed. In specific implementation, users may choose whether to close the display of interactive messages as needed.

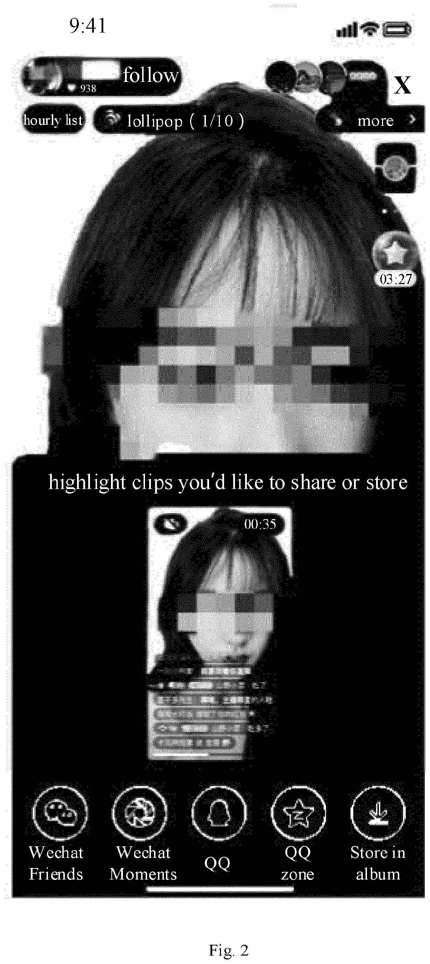

As shown in Fig. 2, it is a live clip of exciting content generated in real time obtained during the live broadcast. The client may click to play the live clip in real time, or share the live clip in real time to WeChat friends, WeChat Moments, Microblogs, etc., or store locally to play the live clip at any time, thereby realizing a real-time dissemination of highlights of the clip content. Since the live clip also contains the corresponding interactive message, the effect of the live clip display is improved.

In the method for displaying a live clip provided by the embodiments of the present disclosure, the server obtains the live clip and interactive message corresponding to the identifier of the live clip according to the identifier of the live clip in the first request information sent by the client, and sends them to the client. The client displays the live clip and the interactive message corresponding to the live clip according to the identifier of the live stream, the timestamp of the live clip, and the timestamp of the interactive message. The server may respond to the client's request in a timely manner so that the client may display the live clip and interactive messages synchronously, thereby realizing the real-time display of the highlight live clips. By aligning the timestamps, the corresponding interactive message may be displayed while displaying the highlight live broadcast clip, which improves the display effect.

In some embodiments, the method for displaying a live clip in the embodiments of the present disclosure may further include: sending a live clip push message to the client, to enable the client to generate the first request information based on the live clip push message, in which the live clip push message includes the identifier of the live clip.

In the embodiment of the present disclosure, the server may send a live clip push message to the client, and the client receives the live clip push message. The user may choose whether to view the pushed live clip as needed, so as to enhance user experience. The live clip push message sent to the client includes the identifier of the live clip, and the client may generate the first request information according to the identifier of the live clip in the live clip push message.

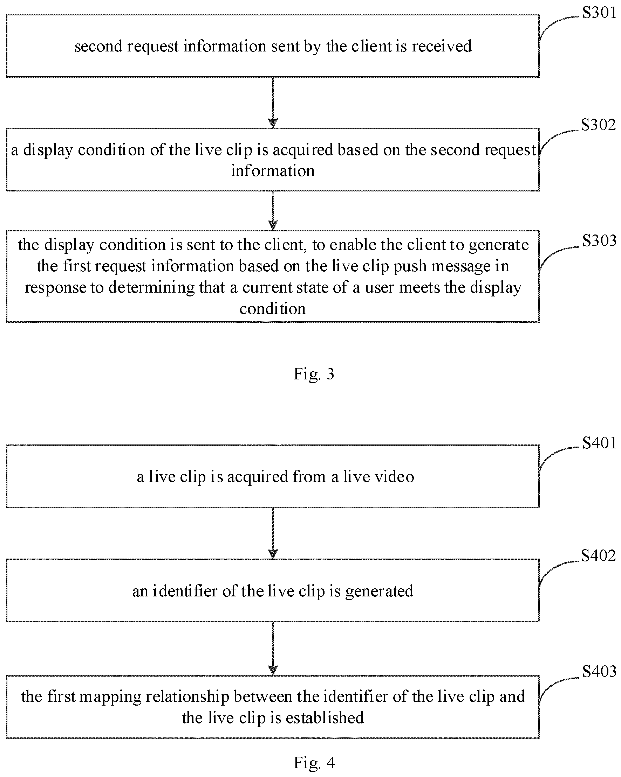

In some embodiments, as shown in Fig. 3, before sending the live clip push message to the client, the method for displaying the live clip of the embodiment of the present disclosure may further include following steps.

In step S301, second request information sent by the client is received.

Optionally, when a user enters a live broadcast room, the client may send the second request information to the server for the current user for obtaining a display condition of the live clip, and the server receives the second request information.

In step S302, a display condition of the live clip is acquired based on the second request information.

In the embodiment of the present disclosure, the server obtains the display condition of the live clip according to the second request information received in step S301. In a specific implementation, the display condition of the live clip may be set as required, which will not be limited herein.

In step S303, the display condition is sent to the client, to enable the client to generate the first request information based on the live clip push message in response to determining that a current state of a user meets the display condition.

In the embodiment of the present disclosure, the server sends the display condition of the live clip obtained in step S302 to the client, the client receives the display condition of the live clip and determines whether the current state of the user meets the display condition of the live clip according to the display condition of the live clip. If the condition is met, the client generates the first request information according to the identifier of the live clip in the live clip push message sent by the server. The user state may specifically include, but is not limited to, a logging state and a user level, etc., which will not be limited herein.

Therefore, after the user enters the live broadcast room, the client sends the second request information to the server to obtain the display condition of the live clip, and judge whether the user meets the display condition of the live clip, and if so, when the user initiates a live clip display request, the first request information is generated according to the live clip push message, such that the live clip and interactive message may be obtained in a timely manner, thereby enhancing the user experience and stickiness of use.

In some embodiments, acquiring the live clip corresponding to the identifier in step S102 includes: searching the live clip in a first mapping relationship table based on the identifier of the live clip, in which the first mapping relationship table is pre-stored and includes a first mapping relationship between the identifier of the live clip and the live clip.

In the embodiments of the present disclosure, the first mapping relationship table including first mapping relationship between multiple live broadcast clips and identifiers of the multiple live clips is stored in advance. When the server obtains a live clip, the live clip corresponding to the identifier of the live clip may be searched in the first mapping relationship table in time according to the identifier of the live clip.

In some embodiments, as shown in Fig. 4, the method for displaying a live clip in the embodiments of the present disclosure may further include following steps.

In step S401, a live clip is acquired from a live video.

In the embodiments of the present disclosure, the server acquires a live clip in the live video in the live broadcast room, for example, a highlight in the live video. It should be noted that the acquired live clip includes the identifier of the live stream and the timestamp of the live clip.

In step S402, an identifier of the live clip is generated.

In the embodiments of the present disclosure, the server generates a corresponding identifier for the live clip obtained in step S401, that is, generates the identifier of the live clip.

In step S403, the first mapping relationship between the identifier of the live clip and the live clip is established.

In the embodiment of the present disclosure, the first mapping relationship between the identifier of the live clip and the live clip is established according to the live clip obtained in step S401 and the identifier of the live clip generated in step S402.

Therefore, when the server receives the first request information sent by the client, the corresponding live clip may be searched in the first mapping relationship table according to the identifier of the live clip in the first request information, such that the live clip may be provided to the user in time, thus enhancing the user experience and stickiness.

In some embodiments, acquiring the interactive message corresponding to the identifier of the live clip in step S103 includes: searching the interactive message in a second mapping relationship table based on the identifier of the live clip, in which the second mapping relationship table is pre-stored and includes a second mapping relationship between the identifier of the live clip and the interactive message.

In the embodiment of the present disclosure, the second mapping relationship table including the second mapping relationship between the identifiers of multiple live clips and the corresponding interactive messages is stored in advance. When obtaining the interactive message, the server may search the interactive message corresponding to the identifier of the live clip in the second mapping relationship table in time according to the identifier of the live clip, so as to obtain the interactive message of the live clip corresponding to the identifier of the live clip.

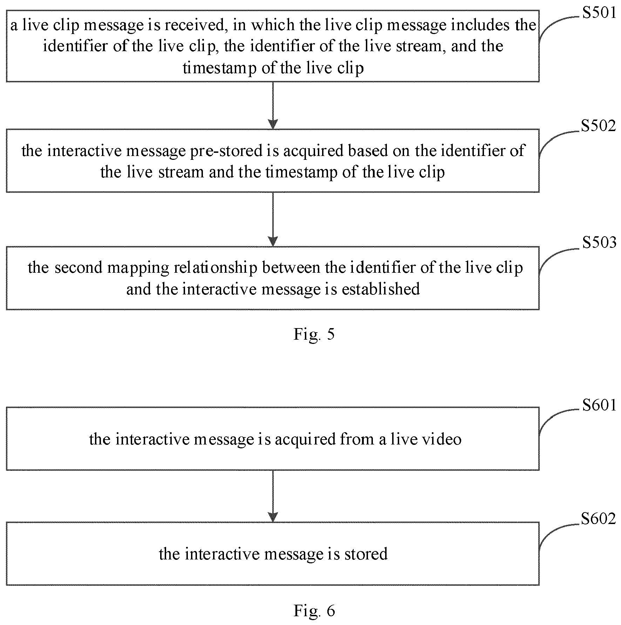

In some embodiments, as shown in Fig. 5, the method for displaying a live clip in the embodiment of the present disclosure further includes following steps.

In step S501, a live clip message is received, in which the live clip message includes the identifier of the live clip, the identifier of the live stream, and the timestamp of the live clip.

In the embodiment of the present disclosure, the server generates a live clip message after acquiring the live clip in the live video and generating the corresponding identifier of the live clip, in which the live clip message includes the identifier of the live clip, the identifier of the live stream, and the timestamp of the live clip.

In step S502, the interactive message pre-stored is acquired based on the identifier of the live stream and the timestamp of the live clip.

In the embodiment of the present disclosure, the server obtains the pre-stored interactive message corresponding to the identifier of the live stream and the timestamp of the live clip according to the identifier of the live stream in the live clip message and the timestamp of the live clip.

In step S503, the second mapping relationship between the identifier of the live clip and the interactive message is established.

In the embodiment of the present disclosure, the server establishes the second mapping relationship between the identifier of the live clip in the live clip message and the interactive message obtained in step S502.

Therefore, when receiving the first request information sent by the client, the server may search the corresponding interactive message in the second mapping relationship table according to the identifier of the live clip in the first request information, and may display the live clip and the interactive message corresponding to the live clip at the same time, which enhances user experience and stickiness.

In some embodiments, as shown in Fig. 6, the method for displaying a live clip in the embodiment of the present disclosure further includes following steps.

In step S601, the interactive message is acquired from a live video.

In the embodiment of the present disclosure, the server obtains the interactive message in the live video in the live room, in which the interactive message includes the identifier of the live stream and the timestamp of the interactive message.

In step S602, the interactive message is stored.

In the embodiment of the present disclosure, the server stores the interactive message in a database or a cache.

As a result, the server stores the interactive message corresponding to the live clip, and when receiving the first request information from the client, the server sends the live clip and the interactive message corresponding to the live clip to the client for display. The user may view the interactive message at the same time of watching the live clip, which enhances user experience and stickiness.

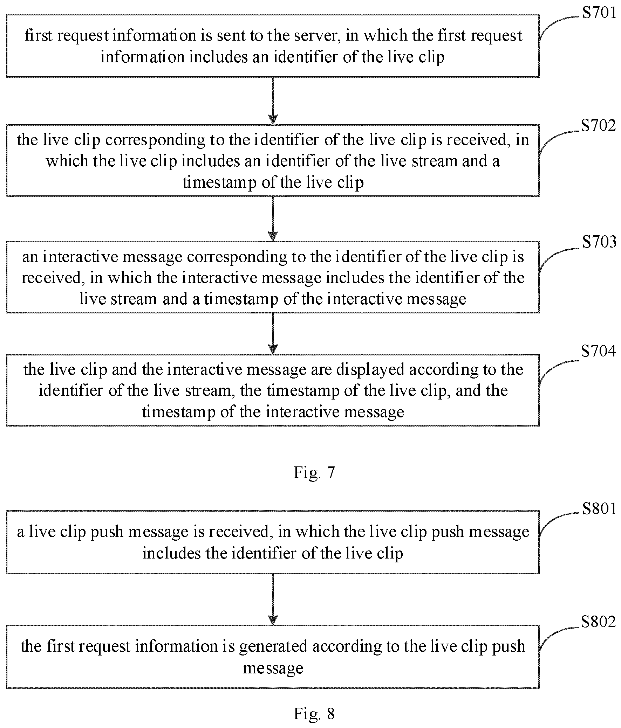

Fig. 7 is a flowchart showing a method for displaying a live clip according to another embodiment. As shown in Fig. 7, the method for displaying a live clip may be applied to a client, and includes the following steps.

In step S701, first request information is sent to the server, in which the first request information includes an identifier of the live clip.

It should be noted that the executive object of the method for displaying a live clip in the embodiments of the present disclosure is an apparatus for displaying a live clip provided in the client provided by the embodiments of the present disclosure.

In step S702, the live clip corresponding to the identifier of the live clip is received, in which the live clip includes an identifier of the live stream and a timestamp of the live clip.

In step S703, an interactive message corresponding to the identifier of the live clip is received, in which the interactive message includes the identifier of the live stream and a timestamp of the interactive message.

In step S704, the live clip and the interactive message are displayed according to the identifier of the live stream, the timestamp of the live clip, and the timestamp of the interactive message.

It should be noted that the above explanation of the embodiments of the method for displaying a live clip is also applicable to the method for displaying a live clip of the embodiments of the present disclosure, and the specific process will not be repeated here.

In the method for displaying a live clip provided by the embodiments of the present disclosure, the client sends the first request information including the identifier of the live clip to the server, so that the server may obtain the corresponding live clip and interactive message according to the identifier of the live clip. The client displays the received live clips and interactive messages according to the identifier of the live stream, the timestamp of the live clip, and the timestamp of the interactive message. The server may respond to the client's request in a timely manner so that the client may display the live clip and interactive message synchronously, thereby realizing a real-time display of the highlight live broadcast clips. By aligning the timestamps, the corresponding interactive message may be displayed while displaying the highlight live broadcast clip, which improves the display effect.

In some embodiments, as shown in Fig. 8, the method for displaying a live clip in the embodiment of the present disclosure may further include following steps.

In step S801, a live clip push message is received, in which the live clip push message includes the identifier of the live clip.

In step S802, the first request information is generated according to the live clip push message.

It should be noted here that the above explanation of the embodiment of the method for displaying a live clip is also applicable to the method for displaying a live clip of the embodiments of the present disclosure, and the specific process will not be repeated here.

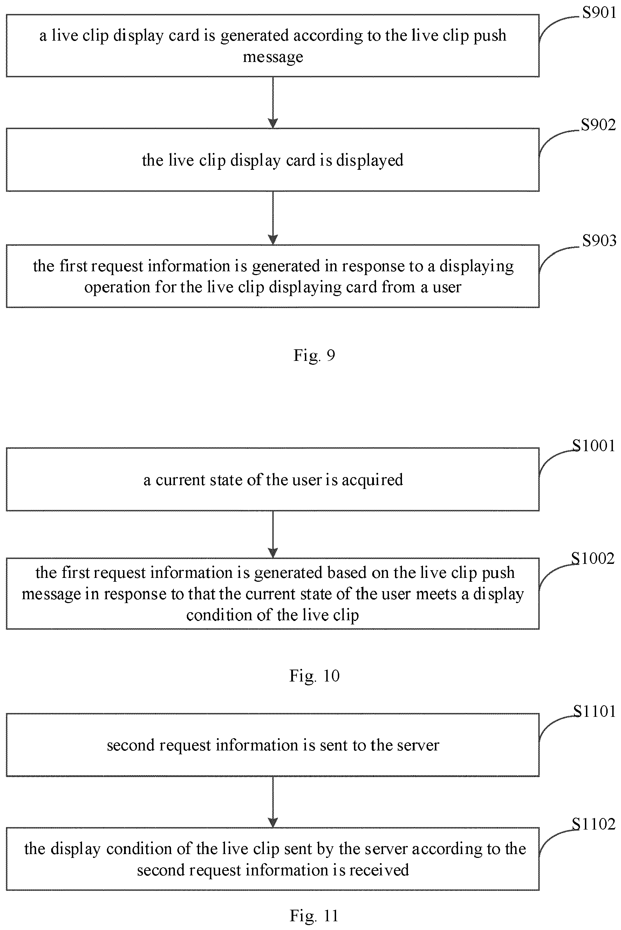

In some embodiments, as shown in Fig. 9, generating the first request information based on the live clip push message in step S802 may also include following steps.

In step S901, a live clip display card is generated according to the live clip push message.

In the embodiment of the present disclosure, the client generates the live clip display card according to the live clip push message sent by the server.

In step S902, the live clip display card is displayed.

In the embodiment of the present disclosure, the client shows the live clip display card to the user.

In step S903, the first request information is generated in response to a displaying operation for the live clip displaying card from a user.

In the embodiment of the present disclosure, the user may choose whether to display the live clip as needs. If yes, the live clip display card is displayed, for example, the user may click a link in the live clip display card, and the client generates the first request information in response to the user's display operation.

In some embodiments, the live clip push message includes at least one of: a cover of the live clip and a duration of the live clip; the live clip displaying card includes at least one of: the cover of the live clip and the duration of the live clip.

As a result, the client shows the live clip display card to the user, which is convenient for the user to choose whether to display the live clip according to their preferences. Only when the user chooses to display the live clip, the live clip and interactive message are obtained, which reduces pressures on the server and enhances the user experience.

In some embodiments, as shown in Fig. 10, generating the first request information based on the live clip push message in step S802 may further include following steps.

In step S1001, a current state of the user is acquired.

In step S1002, the first request information is generated based on the live clip push message in response to that the current state of the user meets a display condition of the live clip.

It should be noted here that the above explanation of the embodiment of the method for displaying a live clip is also applicable to the method for displaying a live clip of the embodiments of the present disclosure, and the specific process will not be repeated here.

In some embodiments, as shown in Fig. 11, the method for displaying a live clip in the embodiment of the present disclosure further includes following steps.

In step S1101, second request information is sent to the server.

In step S1102, the display condition of the live clip sent by the server according to the second request information is received.

It should be noted here that the above explanation of the embodiment of the method for displaying a live clip is also applicable to the method for displaying a live clip of the embodiments of the present disclosure, and the specific process will not be repeated here.

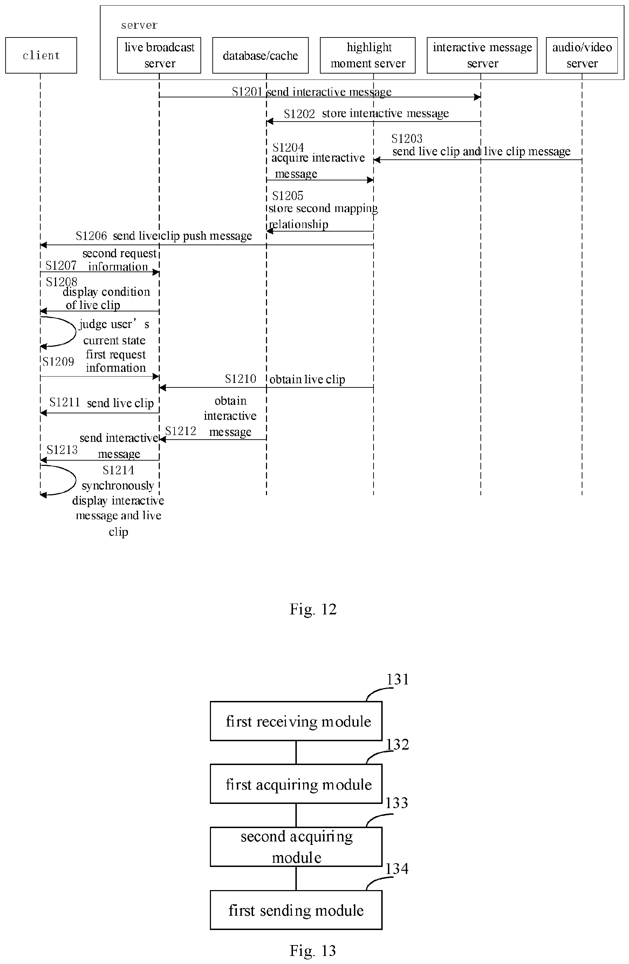

In order to clearly illustrate the method for displaying a live clip in the embodiments of the present disclosure, a detailed description will be given below with reference to Fig. 12.

Fig. 12 is a signaling interaction diagram showing a method for displaying a live clip according to an embodiment. As shown in Fig. 12, taking the server including a live broadcast server, a highlight moment server, an interactive message server, and audio/video server, as an example, the method for displaying a live clip in the embodiments of the present disclosure may specifically include the following steps.

In step S1201, a live broadcast server sends an interactive message in a live video in a live room to an interactive message server, in which the interactive message includes an identifier of a live stream and a timestamp of the interactive message.

In step S1202, the interactive message server receives the interactive message, and stores the interactive message in a database or a cache.

In step S1203, an audio/video server obtains the live clip in the live video in the live room, and generates the corresponding identifier of the live clip, establishes and stores a first mapping relationship between an identifier of the live clip and the live clip, and sends the live clip and a live clip message to a highlight moment server, in which the live clip message includes the identifier of the live clip, an identifier of the live stream, and a timestamp of the live clip.

In step S1204, the highlight moment server obtains the corresponding interactive message from the database or cache according to the identifier of the live stream and the timestamp of the live clip in the live clip message, and establishes a second mapping relationship between the identifier of the live clip and the corresponding interactive message.

In step S1205, the second mapping relationship is stored in the database or cache.

In step S1206, the highlight server sends a live clip push message to the client, in which the live clip push message includes the identifier of the live clip.

In step S1207, the client sends second request information to the live broadcast server for obtaining a display condition of the live clip.

In step S1208, the live broadcast server receives the second request information, and sends the display condition of the live clip to the client.

In step S1209, the client determines whether a current state of a user meets the display condition of the live clip, if yes, the client generates first request information according to the identifier of the live clip in the live clip push message, and sends the first request information to the live broadcast server, in which the first request information includes the identifier of the live clip.

In step S1210, the live broadcast server receives the first request information, and obtains the corresponding live clip from the highlight moment server according to the identifier of the live clip in the first request information and the first mapping relationship.

In step S1211, the live broadcast server sends the live clip to the client.

In step S1212, the live broadcast server receives the first request information, and obtains the corresponding interactive message from the database or the cache according to the second mapping relationship based on the identifier of the live clip in the first request information.

In step S1213, the live broadcast server sends the interactive message to the client.

In step S1214, the client synchronously displays the interactive message and the live clip according to the identifier of the live stream and the timestamp of the interactive message in the interactive message, and the identifier of the live stream and the timestamp of the live clip in the live clip.

Fig. 13 is a block diagram showing an apparatus for displaying a live clip according to an embodiment. Referring to Fig. 13, the apparatus includes a first receiving module 131, a first acquiring module 132, a second acquiring module 133, and a first sending module 134.

The first receiving module 131 is configured to receive first request information sent by a client, the first request information including an identifier of the live clip.

The a first acquiring module 132 is configured to acquire the live clip corresponding to the identifier of the live clip, the live clip including an identifier of a live stream and a timestamp of the live clip.

The second acquiring module 133 is configured to acquire an interactive message corresponding to the identifier of the live clip, the interactive message including the identifier of the live stream and a timestamp of the interactive message.

The first sending module 134 is configured to send the live clip and the interactive message to the client, to enable the client to display the live clip and the interactive message based on the identifier of the live stream, the timestamp of the live clip and the timestamp of the interactive message.

In an embodiment of the present disclosure, the apparatus for displaying a live clip further includes: a second sending module, which is configured to send a live clip push message to the client, to enable the client to generate the first request information based on the live clip push message, the live clip push message including the identifier of the live clip.

In an embodiment of the present disclosure, the apparatus for displaying a live clip may further include: a second receiving module, configured to receive second request information sent by the client; a third acquiring module, configured to acquire a display condition of the live clip based on the second request information; and a third sending module, configured to send the display condition to the client, to enable the client to generate the first request information based on the live clip push message in response to determining that a current state of a user meets the display condition.

In an embodiment of the present disclosure, the first acquiring module 132 may include: a first searching unit, configured to search the live clip in a first mapping relationship table based on the identifier of the live clip, in which the first mapping relationship table is pre-stored and includes a first mapping relationship between the identifier of the live clip and the live clip.

In an embodiment of the present disclosure, the apparatus for displaying a live clip may further include: a fourth acquiring module, configured to acquire the live clip from a live video; a first generating module, configured to generate the identifier of the live clip; and a first mapping module, configured to establish the first mapping relationship between the identifier of the live clip and the live clip.

In an embodiment of the present disclosure, the second acquiring module 133 may include: a second searching unit, configured to search the interactive message in a second mapping relationship table based on the identifier of the live clip, in which the second mapping relationship table is pre-stored and includes a second mapping relationship between the identifier of the live clip and the interactive message.

In an embodiment of the present disclosure, the apparatus for displaying a live clip may further include: a third receiving module, configured to receive a live clip message including the identifier of the live clip, the identifier of the live stream and the timestamp of the live clip; a fifth acquiring module, configured to acquire the interactive message pre-stored based on the identifier of the live stream and the timestamp of the live clip; and a second mapping module, configured to establish the second mapping relationship between the identifier of the live clip and the interactive message.

In an embodiment of the present disclosure, the apparatus for displaying a live clip may further include: a sixth acquiring module, configured to acquire the interactive message from a live video; and a first storing module, configured to store the interactive message.

In the method for displaying a live clip provided by the embodiments of the present disclosure, the server obtains the live clip and interactive message corresponding to the identifier of the live clip according to the identifier of the live clip in the first request information sent by the client, and sends them to the client. The client displays the live clip and the interactive message corresponding to the live clip according to the identifier of the live stream, the timestamp of the live clip, and the timestamp of the interactive message. The server may establish the first mapping relationship table between the identifier of the live clip and the live clip and the second mapping relationship table between the identifier of the live clip and the interactive message, such that the server may respond to the client's request in a timely manner, and the client may display the live clip and interactive messages synchronously, thereby realizing the real-time display of the highlight live clips. By aligning the timestamps, the corresponding interactive message may be displayed while displaying the highlight live broadcast clip, which improves the display effect.

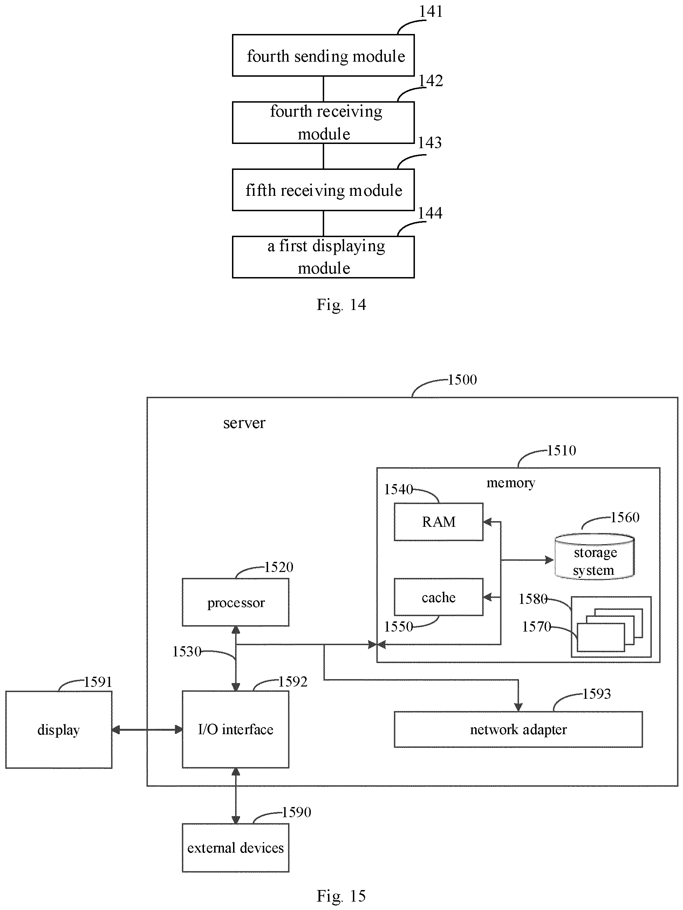

Fig. 14 is a block diagram showing an apparatus for displaying a live clip according to another embodiment. Referring to Fig. 14, the apparatus includes a fourth sending module 141, a fourth receiving module 142, a fifth receiving module 143, and a first displaying module 144.

The fourth sending module 141 is configured to send first request information to a server, the first request information including an identifier of the live clip.

The fourth receiving module 142 is configured to receive the live clip corresponding to the identifier of the live clip, the live clip including an identifier of the live stream and a timestamp of the live clip.

The fifth receiving module 143 is configured to receive an interactive message corresponding to the identifier of the live clip, the interactive message including the identifier of the live stream and a timestamp of the interactive message.

The first displaying module 144 is configured to display the live clip and the interactive message based on the identifier of the live stream, the timestamp of the live clip and the timestamp of the interactive message.

In an embodiment of the present disclosure, the apparatus for displaying a live clip may further include: a sixth receiving module, configured to receive a live clip push message including the identifier of the live clip; and a first pushing module, configured to generate the first request information based on the live clip push message.

In an embodiment of the present disclosure, the first pushing module may include: a first generating unit, configured to generate a live clip displaying card based on the live clip push message; a displaying unit, configured to display the live clip displaying card; and a second generating unit, configured to generate the first request information in response to a displaying operation for the live clip displaying card from a user.

In an embodiment of the present disclosure, the live clip push message includes at least one of: a cover of the live clip and a duration of the live clip; the live clip displaying card includes at least one of: the cover of the live clip and the duration of the live clip.

In an embodiment of the present disclosure, the first pushing module may include: an acquiring unit, configured to acquire a current state of a user; and a third generation unit, configured to generate the first request information based on the live clip push message in response to that the current state of the user meets a display condition of the live clip.

In an embodiment of the present disclosure, the apparatus for displaying a live clip further includes: a fourth sending module, configured to send second request information to the server; and a sixth receiving module, configured to receive the display condition of the live clip sent by the server according to the second request information.

Regarding the apparatus in the foregoing embodiment, the specific manner in which each module performs the operation has been described in detail in the method embodiments, and a detailed description will not be given here.

In the method for displaying a live clip provided by the embodiments of the present disclosure, the client sends the first request information including the identifier of the live clip to the server, so that the server may obtain the corresponding live clip and interactive message according to the identifier of the live clip. The client displays the received live clips and interactive messages according to the identifier of the live stream, the timestamp of the live clip, and the timestamp of the interactive message. The server may respond to the client's request in a in a timely manner so that the client may display the live clip and interactive messages synchronously, thereby realizing the real-time display of the highlight live clips. By aligning the timestamps, the corresponding interactive message may be displayed while displaying the highlight live broadcast clip, which improves the display effect. The client generates a live clip display card according to the live clip push message sent by the server and displays the same to the user, so that the user may choose whether to display the live clip according to their preferences. Only when the user chooses to display the live clip, the live clip and interactive message are obtained, which reduces pressures on the server and enhances the user experience.

Fig. 15 is a block diagram showing an electronic device 1500 for displaying a live clip according to an embodiment. Referring to Fig. 15, the electronic device 1500 includes a memory 1510, a processor 1520, a bus 1530 connecting different components (including the memory 1510 and the processor 1520). The memory 1510 stores a computer program. When the processor 1520 executes the program, the method for displaying a live clip in the embodiment of the present disclosure is implemented.

The bus 1530 represents one or more of several types of bus structures, including a memory bus or a memory controller, a peripheral bus, a graphics acceleration port, a processor, or a local bus using any bus structure among multiple bus structures. For example, these architectures include but are not limited to industry standard architecture (ISA) bus, microchannel architecture (MAC) bus, enhanced ISA bus, Video Electronics Standards Association (VESA) local bus, and peripheral component interconnection (PCI) bus.

The electronic device 1500 typically includes a variety of electronic device-readable medium. These medium may be any available medium that may be accessed by the electronic device 1500, including volatile and nonvolatile medium, removable and non-removable medium.

The memory 1510 may also include a computer system readable medium in the form of a volatile memory, such as a random access memory (RAM) 1540 and/or a cache memory 1550. The electronic device 1500 may further include other removable/non-removable, volatile/nonvolatile computer system storage medium. For example, the storage system 1560 may be used to read and write non-removable, non-volatile magnetic medium (not shown in Fig. 15 and generally referred to as a "hard drive"). Although not shown in Fig. 15, a disk drive for reading and writing to a removable non-volatile disk (such as a "floppy disk"), and a removable non-volatile optical disk (such as CD-ROM, DVD-ROM) may be provided. Or other optical medium) read and write optical disc drives. In these cases, each drive may be connected to the bus 1530 through one or more data medium interfaces. The memory 1510 may include at least one program product, the program product having a set (for example, at least one) of program modules, and these program modules are configured to perform the functions of the various embodiments of the present disclosure.

A program/utility tool 1580 having a set of (at least one) program module 1570 may be stored in, for example, the memory 1510. Such program module 1570 includes but is not limited to an operating system, one or more application programs, other program modules, and program data Each of these examples or some combination may include the implementation of a network environment. The program module 1570 generally executes the functions and/or methods in the embodiments described in the present disclosure.

The electronic device 1500 may also communicate with one or more external devices 1590 (such as a keyboard, pointing device, display 891, etc.), and may also communicate with one or more devices that enable a user to interact with the electronic device 1500, and/or communicate with any device (such as a network card, modem, etc.) that enables the electronic device 1500 to communicate with one or more other computing devices. This communication may be performed through an input/output (I/O) interface 1592. In addition, the electronic device 1500 may also communicate with one or more networks (for example, a local area network (LAN), a wide area network (WAN), and/or a public network, such as the Internet) through the network adapter 1593. As shown in Fig. 15, the network adapter 1593 communicates with other modules of the electronic device 1500 through the bus 1530. It should be understood that although not shown in the figure, other hardware and/or software modules may be used in conjunction with the electronic device 1500, including but not limited to: microcode, device drivers, redundant processing units, external disk drive arrays, RAID systems, tape drives and data backup storage system, etc.

The processor 1520 executes various functional applications and data processing by running programs stored in the memory 1510.

It should be noted that, for the implementation process and technical principle of the electronic device of this embodiment, please refer to the foregoing explanation of the video recommendation method of the embodiment of the present disclosure, which will not be repeated here.

The electronic device proposed in the embodiments of the present disclosure may execute the method for displaying a live clip. The client sends first request information to the server, and the server obtains the identifier of the live clip in the first request information sent by the client. The live clip and interactive message corresponding to the identifier of the live clip are sent to the client, and the client display the live clip and the interactive message corresponding to the live clip according to the identifier of the live stream, the timestamp of the live clip, and the timestamp of the interactive message, respond to the user's request to display live clips in a timely manner so that the client may display the live clip and interactive message synchronously, thereby realizing a real-time display of the highlight live broadcast clips. By aligning the timestamps, the corresponding interactive message may be displayed while displaying the highlight live broadcast clip, which improves the display effect.

In order to implement the foregoing embodiments, the present disclosure also proposes a computer-readable storage medium including instructions, such as a memory 1510 including instructions, which may be executed by the processor 1520 of the electronic device 1500 to complete the foregoing method. Alternatively, the computer-readable storage medium may be ROM, random access memory (RAM), CD-ROM, magnetic tape, floppy disk, optical data storage device, etc.

In order to implement the foregoing embodiments, the present disclosure also proposes a computer program product, including a computer program, which implements the foregoing method when the computer program is executed by the processor 1520 of the electronic device 1500.

Those skilled in the art will easily think of other embodiments of the present disclosure after considering the specification and practicing the invention disclosed herein. This application is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The description and the embodiments are to be regarded as exemplary only, and the true scope and spirit of the present disclosure are pointed out by the following claims.

## Claims

1. A method for displaying a live clip, comprising:
receiving (S101) first request information sent by a client, the first request information comprising an identifier of the live clip;
acquiring (S102) the live clip corresponding to the identifier of the live clip, the live clip comprising an identifier of a live stream and a timestamp of the live clip;
acquiring (S103) an interactive message corresponding to the identifier of the live clip, the interactive message comprising the identifier of the live stream and a timestamp of the interactive message; and
sending (S104) the live clip and the interactive message to the client, to enable the client to display the live clip and the interactive message based on the identifier of the live stream, the timestamp of the live clip and the timestamp of the interactive message.

2. The method of claim 1, further comprising:
sending a live clip push message to the client, to enable the client to generate the first request information based on the live clip push message, the live clip push message comprising the identifier of the live clip.

3. The method of claim 2, wherein before sending the live clip push message to the client, the method further comprises:
receiving (S301) second request information sent by the client;
acquiring (S302) a display condition of the live clip based on the second request information; and
sending (S303) the display condition to the client, to enable the client to generate the first request information based on the live clip push message in response to determining that a current state of a user meets the display condition.

4. The method of any of claims 1 to 3, wherein acquiring the live clip corresponding to the identifier comprises:
searching the live clip in a first mapping relationship table based on the identifier of the live clip, wherein the first mapping relationship table is pre-stored and comprises a first mapping relationship between the identifier of the live clip and the live clip.

5. The method of any of claims 1 to 4, further comprising:
acquiring (S401) the live clip from a live video;
generating (S402) the identifier of the live clip; and
establishing (S403) the first mapping relationship between the identifier of the live clip and the live clip.

6. The method of any of claims 1 to 5, wherein acquiring the interactive message corresponding to the identifier of the live clip comprises:
searching the interactive message in a second mapping relationship table based on the identifier of the live clip, wherein the second mapping relationship table is pre-stored and comprises a second mapping relationship between the identifier of the live clip and the interactive message.

7. The method of any of claims 1 to 6, further comprising:
receiving (S501) a live clip message comprising the identifier of the live clip, the identifier of the live stream and the timestamp of the live clip;
acquiring (S502) the interactive message pre-stored based on the identifier of the live stream and the timestamp of the live clip; and
establishing (S503) the second mapping relationship between the identifier of the live clip and the interactive message.

8. The method of any of claims 1 to 7, further comprising:
acquiring (S601) the interactive message from a live video; and
storing (S602) the interactive message.

9. A method for displaying a live clip, comprising:
sending (S701) first request information to a server, the first request information comprising an identifier of the live clip;
receiving (S702) the live clip corresponding to the identifier of the live clip, the live clip comprising an identifier of the live stream and a timestamp of the live clip;
receiving (S703) an interactive message corresponding to the identifier of the live clip, the interactive message comprising the identifier of the live stream and a timestamp of the interactive message; and
displaying (S704) the live clip and the interactive message based on the identifier of the live stream, the timestamp of the live clip and the timestamp of the interactive message.

10. The method of claim 9, further comprising:
receiving (S801) a live clip push message comprising the identifier of the live clip; and
generating (S802) the first request information based on the live clip push message.

11. The method of claim 10, wherein generating the first request information based on the live clip push message comprises:
generating (S901) a live clip displaying card based on the live clip push message;
displaying (S902) the live clip displaying card; and
generating (S903) the first request information in response to a displaying operation for the live clip displaying card from a user.

12. The method of claim 11, wherein the live clip push message comprises at least one of: a cover of the live clip and a duration of the live clip;
the live clip displaying card comprises at least one of: the cover of the live clip and the duration of the live clip.

13. The method of any of claims 10 to 12, wherein generating the first request information based on the live clip push message comprises:
acquiring (S1001) a current state of a user; and
generating (S1002) the first request information based on the live clip push message in response to that the current state of the user meets a display condition of the live clip.

14. The method of claim 13, further comprising:
sending (S1101) second request information to the server; and
receiving (S1102)the display condition of the live clip sent by the server according to the second request information.

15. An apparatus for displaying a live clip, comprising:
a first receiving module (131), configured to receive first request information sent by a client, the first request information comprising an identifier of the live clip;
a first acquiring module (132), configured to acquire the live clip corresponding to the identifier of the live clip, the live clip comprising an identifier of a live stream and a timestamp of the live clip;
a second acquiring module (133), configured to acquire an interactive message corresponding to the identifier of the live clip, the interactive message comprising the identifier of the live stream and a timestamp of the interactive message; and
a first sending module (134), configured to send the live clip and the interactive message to the client, to enable the client to display the live clip and the interactive message based on the identifier of the live stream, the timestamp of the live clip and the timestamp of the interactive message.
